# EUROPÄISCHE PATENTSCHRIFT

(11) **EP 1 060 150 B1**
(45) Veröffentlichungstag und Bekanntmachung des Hinweises auf die Patenterteilung: **12.09.2001**
(21) Anmeldenummer: 99910279.1
(22) Anmeldetag: 25.02.1999
(51) Int. Cl.: C04B 35/622, G11B 5/64

(54) **SIC-SPEICHERPLATTENSUBSTRAT MIT EINER INERTSCHICHT AUF DER OBERFLÄCHE**
SIC STORAGE DISK SUBSTRATE WITH AN INERT LAYER ON THE SURFACE
SUBSTRAT EN SILICIUM RECOUVERT D'UNE COUCHE INERTE ET DESTINE A DES CIBLES DE MEMOIRE

(30) Priorität: 05.03.1998 DE 19809550
(43) Veröffentlichungstag der Anmeldung: 20.12.2000
(73) Patentinhaber: Wacker-Chemie GmbH, 81737 München (DE)
(72) Erfinder: KÖLKER, Helmut, D-81476 München (DE); WIESE, Ulrich, D-84489 Burghausen (DE)
(74) Vertreter: Potten, Holger
(86) Internationale Anmeldenummer: EP9901212
(87) Internationale Veröffentlichungsnummer: WO9944965

(56) Entgegenhaltungen:
- US-A- 4 657 825
- US-A- 5 480 695
- PATENT ABSTRACTS OF JAPAN vol. 010, no. 097 (P-446), 15. April 1986 & JP 60 229224 A (SUMITOMO TOKUSHIYU KINZOKU KK;OTHERS: 01), 14. November 1985

## Beschreibung

Die Erfindung betrifft ein SiC-Speicherplattensubstrat mit einer Inertschicht auf der Oberfläche.

Festspeicherplatten werden ganz allgemein so hergestellt, daß man auf ein scheibenförmiges Substrat eine dünne magnetische Schicht durch Sputtern aufbringt. Die dazu verwendeten Sputteranlagen haben verschiedene Stationen, die nacheinander von dem Substrat durchlaufen werden, und die jeweils ein anderes Material auf dem Substrat anbringen, z.B. in einer Station eine Chrom-Grundschicht, in der folgenden die Magnetschicht, in einer weiteren eine Schutzschicht usw.

Die so hergestellten Speicherplatten werden in ein Laufwerk eingebaut. Dort wird über einen Schreib- und Lesekopf die Information eingeschrieben und gelesen.

Zwei Substrattypen für derartige Speicherplatten haben sich durchgesetzt. Zum einen ein Substrat aus einer AlMg-Legierung, das mit amorphem Nickel-Phosphor beschichtet ist und zum anderen ein Substrat aus Glas.

Glassubstrate werden zunächst mit einer dünnen (z.B. 150 nm (1500 Å), M. Futamoto et al., IEEE Trans. Magn., Vol. 27, No. 6, Nov. 91, S. 5280 - 5285) Chromschicht besputtert, auf die dann die eigentliche Magnetschicht bestehend aus einer Kobaltlegierung (Co mit Beimengungen aus Pt, Ta, Ni, Cr u.a.) aufgebracht wird (einige hundert Å dick).

Die Wirkung der Chromschicht besteht darin, daß sie der nachfolgenden Magnetschicht eine Vorzugsorientierung verleiht, bei der die hexagonale C-Achse der Magnetlegierung in der Ebene der Oberfläche liegt. Dies wiederum zieht optimale magnetische Eigenschaften nach sich (M. Doerner, R. White, Materials Issues in Magnetic-Disk Performance, MRS Bulletin 21 (9), 1996, 28-34). Ohne eine solche Chromschicht sind die magnetischen Eigenschaften merklich verschlechtert und die Magnetspeicherplatten von minderer Qualität.

Eine ähnliche Konstellation hat man bei Aluminiumsubstraten. Um die Oberfläche zu härten sind diese Substrate mit einer amorphen Nickel-Phosphor-Schicht überzogen. Auf diese wird aus vorgenannten Gründen zunächst eine Chromschicht und anschließend eine Cobaltlegierung als Magnetschicht aufgesputtert.

Sowohl Glas als auch Ni/P sind amorph und üben keinerlei kristallografischen Einfluß auf die, für das System wichtige Orientierung der metallischen Magnetschichten aus.

Aufgrund der stetigen Zunahme der Informationsdichte sowie der Schreib- und Lesegeschwindigkeit, die allerhöchste Anforderungen an die Ebenheit, Härte, Steifigkeit und Glätte der Substrate sowie Qualität der Magnetschicht stellt, wird nach anderen alternativen Substratmaterialien gesucht.

Unter anderem ist ein Substrat bekannt geworden, das aus einer monokristallinen Siliciumscheibe besteht. Ähnliche einkristalline Wafer sind in der Halbleiterindustrie bekannt, wo sie zu Mikrochips und anderen Halbleiterbauelementen weiterverarbeitet werden.

Während nun solche Si-Wafer in der Halbleiterindustrie hervorragende Dienste leisten, haben sie sich in der Festplattenindustrie nicht durchsetzen können, weil sie für die Maßstäbe dieser Industrie nicht kostengünstig hergestellt werden konnten. Darüber hinaus haben sie auch den Nachteil einer geringen Steifigkeit, so daß sie hohen Ansprüchen an einen vibrationsarmen Betrieb im Festplattenlaufwerk bei hohen Drehzahlen nicht genügen. Außerdem ist Silicium sehr spröde und sowohl beim Hantieren als auch in der Laufwerkanwendung bruchgefährdet.

In der japanischen Offenlegungsschrift J 06-187628 ist eine thermische Oxidhaut auf Speicherplattensubstraten aus monokristallinem Silicium beschrieben. Sie führt zu verbesserten magnetischen Eigenschaften, insbesondere ist die Koerzitivkraft gegenüber einer nicht oxidierten Silicium Hard Disk verbessert. Da jedoch die übrigen oben angeführten Nachteile weiterhin bestehen hat sich eine technische Anwendung diese Speicherplattensubstrate nicht durchsetzen können.

Aus US 5,487,931 (Annacone) ist ein Speicherplattensubstrat bekannt, das aus gesintertem SiC besteht, das mit einer dünnen Schicht aus polykristallinem oder amorphem Silicium beschichtet ist. Die SiC-Grundscheibe besitzt eine hohe Steifigkeit, Härte und Festigkeit. Sie entspricht daher höchsten Anforderungen an geringe Vibration, an hohe Drehzahlen und geringe Plattenstärke. Die Siliciumschicht an der Oberfläche andererseits ermöglicht eine ausgezeichnete Politur, so daß auch höchste Anforderungen an eine geringe Mikrorauhigkeit erfüllt werden. Zur Herstellung einer Speicherplatte muß dieses SiC-Substrat, das mit einer polykristallinen oder amorphen Siliciumschicht beschichtet ist, mit einer Magnetbeschichtung auf der Siliciumoberfläche versehen werden. Die Magnetschicht darf dabei nicht mit der Si-Oberfläche reagieren oder in ihrer Orientierung vom polykristallinen Silicium beeinträchtigt werden. Nachteiligerweise reagiert jedoch Silicium schon bei Temperaturen ab etwa 400° C in wenigen Sekunden vollständig mit bis zu 100 nm (1000 Å) dicken Metallschichten (C. M. Osburm, "Silicides" in Rapid Thermal Processing , ed. R. B. Fair, Academic Press 1993.) Die Silicidbildung von Chrom erfolgt beispielsweise schon bei Temperaturen knapp oberhalb von 350° C. Angesichts der sehr dünnen Chromschichten wirkt sich eine Silicidbildung äußerst nachteilig auf die Eigenschaften der anschließend aufgebrachten Magnetschicht aus.

Ein Ziel der Hard Disk Hersteller ist die langfristige Anhebung der Sputtertemperaturen um so den stetig wachsenden Anforderungen an die Qualität der Magnetschicht (höhere Koerzitivkraft etc.) gerecht zu werden.
Es ist daher wünschenswert, ein Speicherplattensubstrat zur Verfügung zu stellen, das die Vorteile eines Si beschichteten SiC-Speicherplattensubstrats besitzt und dabei die Nachteile, die Sputtertemperaturen über 350°C verursachen, vermeidet.

Die Erfindung betrifft ein Substrat aus gesintertem SiC welches mit einer Siliciumschicht versehen ist, dadurch gekennzeichnet, daß auf der Siliciumschicht eine Inertschicht vorhanden ist.

Die Inertschicht ist vorzugsweise so dünn, daß die extrem niedrige Mikrorauhigkeit der Siliciumschicht durch sie nicht gestört wird. Die Mikrorauhigkeit ist vorzugsweise Ra < 10 Angström, besonders bevorzugt Ra < 8 Å (Ra = arithmetic average roughness gemäß American National Standard ANSI B 46.1-1978). (1Å=0,1 nm)

Die erfindungsgemäß vorhandene Inertschicht hat folgende Vorteile:
Sie verhindert jegliche Silicidbildung zwischen dem Silicium und Chrom.
Sie stabilisiert die Siliciumoberfläche des Substrats. Siliciumoberflächen sind sehr reaktiv und bilden schon bei Raumtemperatur an Luft sogenannte native oxide layers aus. Dies sind in ihrer Zusammensetzung nicht definiert. Ihre Zusammensetzung hängt von den Umgebungsbedingungen ab. Die Inertschicht an der Oberfläche stabilisiert diese chemisch und ermöglicht damit vor allem auch, die weiteren Prozeßschritte bei der Herstellung des Festplattenspeichers definiert zu gestalten.

Die Inertschicht besteht bevorzugt aus einer Verbindung ausgewählt aus der Gruppe SiO₂, Si₃N₄, SiC, SiPOS (SiPOS = semiinsulating polycristalline silicon SiOₓ mit 0,48 < x < 2), Al₂O₃, AlN, B₄C, BN, TiN, TiC, TiCN (=TiC · 4TiN), TiB₂, ZrO₂, C und deren Mischungen.

Besonders bevorzugt besteht die Inertschicht aus SiO₂. Eine SiO₂-Schicht als Inertschicht gestattet es für die Magnetbeschichtung von SiC-Substraten die Erfahrungen auszunutzen, die die Festplattenindustrie heute bei der Magnetbeschichtung von Glassubstraten hat.

Die Inertschicht hat vorzugsweise eine Dicke von 1 nm bis 200 nm (10 bis 2000 Å), besonders bevorzugt von 2 bis 50 nm (20 Å bis 500 Å).

Inertschichten von 100 Å Dicke reichen aus, um die Silicidbildung für die meisten Metalle selbst bei 700-800° C effektiv zu unterbinden.

Für Kobaltlegierungen, wie sie als Magnetschicht üblich sind, reicht schon eine Schichtdicke der Inertschicht von 20 Å aus, damit die Silicidbildung unterbunden wird.

Vorzugsweise ist die Siliciumschicht auf dem SiC-Substrat dotiert.

Die Siliciumschicht ist vorzugsweise dotiert mit mindestens einem Element aus der dritten Hauptgruppe des Periodensystems der Elemente.

Die Siliciumschicht ist vorzugsweise in Mengen von 10¹⁶ bis 10²¹ Atomen/cm³ dotiert.

Durch die Dotierung der Siliciumschicht mit den genannten Elementen läßt sich die Oxidationsrate beeinflussen, so daß die Oxidhaut besser oder schneller wächst. Auch der elektrische Widerstand wird erniedrigt, was für das sogenannte Biassputtering von Interesse ist.

Dünne Inertschichten auf fein polierten Siliciumoberflächen verändern die Mikrorauhigkeit der Si-Oberfläche nicht. Eine Inertschicht ist also kein Hindernis für die gewünschte Spezifikation bei der Politur, das heißt man kann auch bei erfindungsgemäßen Substraten die für Speicherplattensubstraten gewünschten extrem niedrigen Oberflächenrauhigkeitswerte über die bekannte Poliertechnologie (z. B. CMP-Poliertechnologie) in der Siliciümoberfläche einstellen. Diese wird nach dem Aufbringen der Inertschicht unverändert beibehalten.

Erfindungsgemäße Substrate werden beispielsweise hergestellt, indem man ein nach dem Stand der Technik (z.B. US 5,487,931 Annacone) hergestelltes Si beschichtetes SiC-Substrat in an sich bekannter Art und Weise mit einer Inertschicht versieht.

Diese Inertschicht wird vorzugsweise erzeugt, indem das Material, welches die Inertschicht bildet in an sich bekannter Art und Weise auf die Si-Oberfläche in einer derart dünnen Schicht aufgebracht wird, daß die Oberflächenrauhigkeit der Si-Oberfläche nicht auf einen Ra-Wert größer als 10 Å ansteigt.

Dies kann beispielsweise dadurch geschehen, daß eine dünne SiO₂-Schicht oder andere gegenüber Chrom oder den jeweiligen zur Magnetisierung verwendeten Legierungen inerte Materialien wie z.B. Si₃N₄, Al₂O₃, SiC, TiB, TiC, oder TiN aufgesputtert werden. Entsprechende Verfahren sind im Stand der Technik bekannt. Das Aufsputtern kann dabei in der gleichen Sputteranlage erfolgen, in der auch die Magnetschicht auf dem SiC-Festplattensubstrat erzeugt wird.

Eine Oxidhaut kann auch nach den aus der Halbleitertechnologie bekannten Verfahren hergestellt werden. Dies kann z.B. durch Oxidation der Siliciumoberfläche bei z. B. 700° C unter Wasserdampf oder bei z. B. 1000° C unter reinem Sauerstoff erfolgen. Si₃N₄ kann beispielsweise auch durch Nitridierung der Si-Oberfläche mittels NH₃ erzeugt werden (z. B. bei 950°C, 30 Min.).

Es ist jedoch auch möglich, durch CVD-Verfahren eine Inertschicht auf der Si-Oberfläche des SiC-Substrats abzuscheiden. Eine Oxidhaut läßt sich z.B. bei 450°C aus einer Gasmischung von SiH₄ und O₂ erzeugen. Entsprechende Verfahren sind im Stand der Technik bekannt.

Die Dotierung der Siliciumschicht des beschichteten SiC-Substrats erfolgt nach Verfahren, wie sie aus der Halbleitertechnik bekannt sind.

Die erfindungsgemäßen Substrate lassen sich vorzugsweise als Substrat für Speicherplatten verwenden.

Die folgenden Beispiele dienen der weiteren Erläuterung der Erfindung.

### Beispiel 1:

Eine geläppte SiC-Scheibe, die mit 5 *µ*m Silicium beschichtet ist, wird solange chemomechanisch poliert, bis ein Rauhigkeitswert von Ra < 10 Å erreicht ist.

Die polierte Scheibe wird nach den aus der Halbleitertechnik bekannten Verfahren thermisch oxidiert (1 Std. bei 700°C unter mit H₂O angereichertem Sauerstoffgas), so daß eine Oxidhaut von 10 nm (100 Å) an der Oberfläche entsteht.
Auf dieses erfindungsgemäße Festplattensubstrat wird anschließend bei 400° C zunächst eine Chromschicht von 100 nm (1000 Å) als sogenannte seed layer aufgesputtert. Die Röntgenanalyse zeigt, daß sich keine Chromsilicide gebildet haben.
Anschließend wird auf die Chromschicht eine Magnetschicht von 30 nm (300 Å) aus einer Cobalt-Chrom-Tantal Legierung aufgesputtert. Ihre magnetische Vorzugsrichtung (0001) liegt wie gewünscht in der Schichtebene. Dies stellt die Basis dar für hochwertige Magnetspeicherplatten.

### Vergleichsbeispiel 1:

Eine geläppte SiC-Scheibe, die mit 5 *µ*m Silicium beschichtet ist, wird solange chemomechanisch poliert, bis ein Rauhigkeitswert von Ra < 10 Å erreicht ist.

Die polierte Scheibe wird analog Beispiel 1, bei 400° C mit 100 nm (1000 Å) Chrom und nachfolgend 30 nm (300 Å) der Cobalt-Chrom-Tantal Legierung aus Beispiel 1 beschichtet.
Die magnetische Vorzugsrichtung liegt nicht in der Schichtebene und in der Röntgenanalyse zeigt sich, daß die Chromschicht mit dem Silicium zu Chromsiliciden reagiert hat und auch die CoCrTa-Schicht eine Silicidbildung begonnen hat.

### Beispiel 2:

Eine geläppte SiC-Scheibe mit 7 *µ*m Si beschichtet, wird auf Ra < 10 Å chemomechanisch poliert. Anschließend wird sie bei 950°C in NH₃ thermisch nitridiert. Nach 1 Std. ist eine Si₃N₄-Schicht von 2.5 nm (25 Å) Dicke entstanden.

Die weitere Behandlung und Untersuchung dieses erfindungsgemäßen Festplattensubstrats erfolgt wie in Beispiel 1. Das Ergebnis entspricht Beispiel 1. Es findet sich keine Chromsilicidbildung bei 400°C, sowie eine orientierte Cr-Schicht mit 0001-Vorzugsrichtung in der Schichtebene.

### Beispiel 3:

Eine geläppte SiC-Scheibe, wie in Beispiel 1 mit Si beschichtet und poliert auf Ra < 10 Å, wird in eine Multikammer-Sputeranlage eingebaut, wie sie für die Magnetbeschichtung von Speicherplatten verwendet wird. In der ersten Kammer werden 100 Å TiN aufgesputtert und auf dieses erfindungsgemäße Festplattensubstrat in der zweiten Kammer 100 nm (1000 Å) Chrom bei 450°C. Es zeigt sich bezüglich Chromsilicidbildung und Orientierung das gleiche gute Ergebnis wie in Beispiel 1 und 2.

## Patentansprüche

1. Substrat aus gesintertem SiC welches mit einer Siliciumschicht versehen ist, **dadurch gekennzeichnet, daß** auf der Siliciumschicht eine Inertschicht vorhanden ist.

2. Substrat nach Anspruch 1, **dadurch gekennzeichnet, daß** die Inertschicht so dünn ist, daß die extrem niedrige Mikrorauhigkeit der Siliciumschicht durch sie nicht gestört wird.

3. Substrat nach Anspruch 1 oder 2, **dadurch gekennzeichnet, daß** die Inertschicht aus einer Verbindung aus der Gruppe SiO₂, Si₃N₄, SiC, SiPOS, Al₂O₃, AlN, B₄C, BN, TiN, TiC, TiCN (=TiC 4TiN), TiB₂, ZrO₂, C und deren Mischungen ausgewählt ist.

4. Substrat nach Anspruch 3, **dadurch gekennzeichnet, daß** die Inertschicht aus SiO₂ besteht.

5. Substrat nach einem der Ansprüche 1 bis 4, **dadurch gekennzeichnet, daß** die Inertschicht eine Dicke von 1 nm bis 200 nm (10 Å bis 2000 Å) hat .

6. Substrat nach einem der Ansprüche 1 bis 5, **dadurch gekennzeichnet, daß** die Siliciumschicht dotiert ist.

7. Substrat nach Anspruch 7, **dadurch gekennzeichnet, daß** die Siliciumschicht mit mindestens einem Element aus der dritten Hauptgruppe des Periodensystems der Elemente dotiert ist.

8. Substrat nach Anspruch 6 oder 7, **dadurch gekennzeichnet, daß** es in Mengen von 10¹⁶ bis 10²¹ Atomen/cm³ dotiert ist.

9. Verfahren zur Herstellung eines Substrats gemäß Anspruch 1 bis 8, dadurch gekennzeichent, daß man ein Si beschichtetes SiC-Substrat in an sich bekannter Art und Weise mit einer Inertschicht versieht.

10. Verwendung eines Substrats gemäß einem der Ansprüche 1 bis 8 als Substrat für Speicherplatten.

## Claims

1. Substrate made of sintered SiC which is provided with a silicon layer, **characterized in that** an inert layer is present on the silicon layer.

2. Substrate according to Claim 1, **characterized in that** the inert layer is so thin that the extremely low microroughness of the silicon layer is not disturbed by it.

3. Substrate according to Claim 1 or 2, **characterized in that** the inert layer is selected from a compound from the group SiO₂, Si₃N₄, SiC, SiPOS, Al₂O₃, AlN, B₄C, BN, TiN, TiC, TiCN (=TiC4TiN), TiB₂, ZrO₂, C and mixtures thereof.

4. Substrate according to Claim 3, **characterized in that** the inert layer is composed of SiO₂.

5. Substrate according to one of Claims 1 to 4, **characterized in that** the inert layer has a thickness of 1 nm to 200 nm (10 Å to 2000 Å).

6. Substrate according to one of Claims 1 to 5, **characterized in that** the silicon layer is doped.

7. Substrate according to Claim 7, **characterized in that** the silicon layer is doped with at least one element from the third main group of the Periodic Table of the Elements.

8. Substrate according to Claim 6 or 7, **characterized in that** it is doped in quantities of 10¹⁶ to 10²¹ atoms/cm³.

9. Method for fabricating a substrate according to Claims 1 to 8, **characterized in that** an Si-coated SiC substrate is provided with an inert layer in a manner known per se.

10. Use of a substrate according to one of Claims 1 to 8 as a substrate for storage disks.

## Revendications

1. Substrat en SiC fritté qui est pourvu d'une couche de silicium, **caractérisé en ce qu'**une couche inerte se trouve sur la couche de silicium.

2. Substrat selon la revendication 1, **caractérisé en ce que** la couche inerte est tellement mince que la micro-rugosité extrêmement faible de la couche de silicium n'est pas perturbée par elle.

3. Substrat selon la revendication 1 ou 2, **caractérisé en ce que** la couche inerte a été choisie parmi un composé du groupe SiO₂, Si₃N₄, SiC, SiPOS, Al₂O₃, AlN, B₄C, BN, TiN, TiC, TiCN (=TiC.4TiN), TiB₂, ZrO₂, C et leurs mélanges.

4. Substrat selon la revendication 3, **caractérisé en ce que** la couche inerte est constituée de SiO₂.

5. Substrat selon l'une quelconque des revendications 1 à 4, **caractérisé en ce que** la couche inerte présente une épaisseur de 1 nm à 200 nm (10 Å à 2000 Å).

6. Substrat selon l'une quelconque des revendications 1 à 5, **caractérisé en ce que** la couche de silicium a été dopée.

7. Substrat selon la revendication 7, **caractérisé en ce que** la couche de silicium a été dopée avec au moins un élément du troisième groupe principal du système périodique des éléments.

8. Substrat selon la revendication 6 ou 7, **caractérisé en ce qu'**il a été dopé en des quantités de 10¹⁶ à 10²¹ atomes/cm³.

9. Procédé pour la préparation d'un substrat selon les revendications 1 à 8, **caractérisé en ce qu'**on pourvoit un substrat de SiC recouvert de Si de manière connue en soi d'une couche inerte.

10. Utilisation d'un substrat selon l'une quelconque des revendications 1 à 8 comme substrat pour des cibles de mémoire.
